# EUROPEAN PATENT APPLICATION

(11) **EP 4 818 900 A1**
(43) Date of publication of application: **07.10.2026**
(21) Application number: 24896646.7
(22) Date of filing: 28.11.2024
(51) Int. Cl.: G06F 9/50, G06F 9/455

(54) **GRAPHICS PROCESSING UNIT (GPU) SCHEDULING METHOD AND APPARATUS, AND STORAGE MEDIUM**

(30) Priority: 30.11.2023 CN 202311628327
(71) Applicant: Moore Threads Technology Co., Ltd., Beijing 100036 (CN)
(72) Inventor: WEI, Shoufeng, Beijing 100036 (CN); WANG, Jin, Beijing 100036 (CN); BAI, Yanxu, Beijing 100036 (CN)
(74) Representative: Colombo, Stefano Paolo
(86) International application number: PCT/CN2024/135253
(87) International publication number: WO 2025/113561

(57) **Abstract**

The present disclosure relates to the technical field of Graphics Processing Units (GPUs), and in particular to a GPU scheduling method and apparatus, and a storage medium. The method comprises: acquiring a migration command, the migration command being used for migrating a workload of a source Virtual Machine (VM) from a source GPU core to a target GPU core; on the basis of the migration command, establishing an association relationship between the source VM and a corresponding hardware identifier on the target GPU core; and on the basis of the association relationship after the migration, using the target GPU core to processing the workload from the source VM by the target GPU core based on the migrated association relationship. According to the embodiments of the present application, while the VM is not shut down, workload from the source VM can be processed by the target GPU core is used to process the workload from the source VM, and thus the workload of the source VM is migrated from a high-load source GPU core to an idle target GPU core, so that the thermal migration between cores of multi-core GPU, can be achieved, the load between a plurality of GPU cores can be balanced, the pressure of a high-load GPU core can be reduced, the response time can be shortened, and the throughput rate can be increased.

## Description

### CROSS-REFERENCE TO RELATED APPLICATION

The present disclosure claims priority to Chinese Patent Application No. 202311628327.9, entitled "Graphics Processing Unit (GPU) scheduling method, apparatus, and storage medium", filed on November 30, 2023 with the CNIPA, which is incorporated herein by reference in its entirety.

### TECHNICAL FIELD

The present disclosure relates to the technical field of graphics processing unit, and in particular, to a Graphics Processing Unit (GPU) scheduling method, an apparatus, and a storage medium.

### BACKGROUND

A graphics processing unit (GPU) has very important usages in fields such as graphical image rendering, parallel computing, and artificial intelligence. In the GPU virtualization technology, to achieve a support for a plurality of virtual machines (VMs) using one GPU simultaneously, hardware resources of the GPU will be partitioned into a plurality of parts, to provide an independent hardware resource for each VM.

In this way, in a multi-core GPU scenario, in a current technical solution, usually a workload from a VM can only be processed on a GPU core initially selected upon power on. Since the VM may be powered on or off at any time, there is a possibility that workloads of a plurality of VMs are all concentrated on a certain GPU core, and at this time, other GPU cores are idle, which not only wastes hardware resources, but also increases pressure of the loaded GPU core, resulting in load imbalance between cores. Therefore, a new GPU scheduling method is needed to facilitate load balancing on a plurality of GPU cores, so as to shorten a response time, and improve a throughput.

### SUMMARY

In view of this, the present disclosure provides a graphics processing unit (GPU) scheduling method, an apparatus, and a storage medium.

According to an aspect of the present disclosure, a graphics processing unit (GPU) scheduling method is provided. The method includes:
acquiring a migration command for migrating a workload of a source virtual machine (VM) from a source GPU core onto a target GPU core;
establishing an association relationship between the source VM and a corresponding hardware identifier on the target GPU core based on the migration command; and
processing the workload from the source VM by the target GPU core based on the migrated association relationship.

In a possible implementation, establishing an association relationship between the source VM and the corresponding hardware identifier on the target GPU core based on the migration command comprises:
establishing a mapping between the source VM and a register group of the corresponding hardware identifier on the target GPU core based on the migration command; and
establishing a mapping between the corresponding hardware identifier on the target GPU core and a command queue for the source VM and a mapping between the corresponding hardware identifier on the target GPU core and a general-purpose video memory for the source VM based on the migration command.

In a possible implementation, establishing a mapping between the source VM and the register group of the corresponding hardware identifier on the target GPU core based on the migration command comprises:
acquiring a first address of a register group of a corresponding hardware identifier on the source GPU core and a first address of the register group of the corresponding hardware identifier on the target GPU core based on the migration command, wherein the first address indicates a physical video memory address of a host; and
updating a second-stage page table of the source VM based on the first address of the register group of the corresponding hardware identifier on the source GPU core, so that the updated second-stage page table indicates a mapping relationship between a second address of the source VM and the first address of the register group of the corresponding hardware identifier on the target GPU core, to establish a mapping between the source VM and the register group of the corresponding hardware identifier on the target GPU core, wherein the second address indicates a virtual video memory address of the VM.

In a possible implementation, updating the second-stage page table of the source VM based on the first address of the register group of the corresponding hardware identifier on the source GPU core so that the updated second-stage page table indicates a mapping between the second address of the source VM and the first address of the register group of the corresponding hardware identifier on the target GPU core comprises:
changing a corresponding fragment in the second-stage page table of the source VM based on the first address of the register group of the corresponding hardware identifier on the source GPU core, so that access to the register group of the corresponding hardware identifier on the source GPU core is trapped; and
after trapping, updating the second-stage page table of the source VM, so that the updated second-stage page table indicates a mapping relationship between the second address of the source VM and the first address of the register group of the corresponding hardware identifier on the target GPU core.

In a possible implementation, after trapping, updating the second-stage page table of the source VM, so that the updated second-stage page table indicates a mapping relationship between the second address of the source VM and the first address of the register group of the corresponding hardware identifier on the target GPU core, comprises:
after the trapping, invoking a predetermined error handling function in a host driver to execute error handling for GPU core registration, and invoking a hypervisor mapping interface based on the first address of the register group of the corresponding hardware identifier on the target GPU core to update the second-stage page table, so that the updated second-stage page table indicates a mapping relationship between the second address of the source VM and the first address of the register group of the corresponding hardware identifier on the target GPU core.

In a possible implementation, establishing a mapping between the corresponding hardware identifier on the target GPU core and the command queue for the source VM and a mapping between the corresponding hardware identifier on the target GPU core and the general-purpose video memory for the source VM based on the migration command comprises:
acquiring a first page table of a target command queue based on the migration command, wherein the first page table indicates a mapping relationship between a third address of the command queue and a first address of the command queue, and a mapping relationship between a third address of the general-purpose video memory and a first address of the general-purpose video memory, the target command queue is a command queue indicated by the corresponding hardware identifier on the target GPU core, the first address indicates a physical video memory address of the host, and the third address indicates a virtual video memory address of the host; and
in a case where sizes of the third addresses used by the command queues between the VMs are the same, replacing the first page table of the target command queue with a first page table of the source VM command queue, to establish a mapping between the corresponding hardware identifier on the target GPU core and the command queue for the source VM and a mapping between the corresponding hardware identifier on the target GPU core and the general-purpose video memory for the source VM.

In a possible implementation, in a case where sizes of the third addresses used by the command queues between the VMs are different, establishing a mapping between the corresponding hardware identifier on the target GPU core and the command queue for the source VM and a mapping between the corresponding hardware identifier on the target GPU core and the general-purpose video memory for the source VM based on the migration command, further comprises:
acquiring a second page table of the target command queue based on the migration command, wherein the second page table indicates a mapping relationship between a second address of the command queue and a third address of the command queue, and a mapping relationship between a second address of the general-purpose video memory and a third address of the general-purpose video memory; and
replacing the second page table of the target command queue with a second page table of the source VM command queue.

In a possible implementation, the method further comprises:
establishing a first page table and a second page table for the command queue and the general-purpose video memory of the corresponding hardware identifier of the GPU core, when the host driver is initialized.

In a possible implementation, processing the workload from the source VM by the target GPU core based on the migrated association relationship comprises:
in response to a write operation on the register group of the corresponding hardware identifier on the target GPU core, acquiring information of the workload from the source VM by a micro controller unit (MCU) of the target GPU core based on the migrated association relationship, wherein the information of the workload comprises a second address corresponding to the current workload and a third address of a page table root directory associated with the current workload; and
configuring, by the MCU of the target GPU core, the second address corresponding to the workload and the third address of the page table root directory associated with the current workload to an engine of the target GPU core, so as to address on the video memory of the host by the engine of the target GPU core to process the current workload.

In a possible implementation, establishing an association relationship between the source VM and the corresponding hardware identifier on the target GPU core based on the migration command comprises:
in a case that there is an idle resource on the target GPU core, establishing an association relationship between the source VM and the corresponding hardware identifier on the target GPU core based on the migration command.

In a possible implementation, the migration command comprises an identifier of the target GPU core and the corresponding hardware identifier on the target GPU core.

According to another aspect of the present disclosure, a graphics processing unit (GPU) scheduling apparatus is provided. The apparatus includes:
an acquiring module, configured to acquire a migration command for migrating a workload of a source virtual machine (VM) from a source GPU core onto a target GPU core;
a first establishing module, configured to establish an association relationship between the source VM and the corresponding hardware identifier on the target GPU core based on the migration command; and
a processing module, configured to process the workload from the source VM by the target GPU core based on the migrated association relationship.

In a possible implementation, the first establishing module is configured to:
establish a mapping between the source VM and a register group of the corresponding hardware identifier on the target GPU core based on the migration command; and
establish a mapping between the corresponding hardware identifier on the target GPU core and a command queue for the source VM and a mapping between the corresponding hardware identifier on the target GPU core and a general-purpose video memory for the source VM based on the migration command.

In a possible implementation, establishing a mapping between the source VM and the register group of the corresponding hardware identifier on the target GPU core based on the migration command comprises:
acquiring a first address of a register group of the corresponding hardware identifier on the source GPU core and a first address of the register group of the corresponding hardware identifier on the target GPU core based on the migration command, wherein the first address indicates a physical video memory address of a host; and
updating a second-stage page table of the source VM based on the first address of the register group of the corresponding hardware identifier on the source GPU core, so that the updated second-stage page table indicates a mapping relationship between a second address of the source VM and the first address of the register group of the corresponding hardware identifier on the target GPU core, to establish a mapping between the source VM and the register group of the corresponding hardware identifier on the target GPU core, wherein the second address indicates a virtual video memory address of the VM.

In a possible implementation, updating the second-stage page table of the source VM based on the first address of the register group of the corresponding hardware identifier on the source GPU core so that the updated second-stage page table indicates a mapping between the second address of the source VM and the first address of the register group of the corresponding hardware identifier on the target GPU core comprises:
changing a corresponding fragment in the second-stage page table of the source VM based on the first address of the register group of the corresponding hardware identifier on the source GPU core, so that access to the register group of the corresponding hardware identifier on the source GPU core is trapped; and
after trapping, updating the second-stage page table of the source VM, so that the updated second-stage page table indicates a mapping relationship between the second address of the source VM and the first address of the register group of the corresponding hardware identifier on the target GPU core.

In a possible implementation, after trapping, updating the second-stage page table of the source VM, so that the updated second-stage page table indicates a mapping relationship between the second address of the source VM and the first address of the register group of the corresponding hardware identifier on the target GPU core, comprises:
after the trapping, invoking a predetermined error handling function in a host driver to execute error handling for GPU core registration, and invoking a hypervisor mapping interface based on the first address of the register group of the corresponding hardware identifier on the target GPU core to update the second-stage page table, so that the updated second-stage page table indicates a mapping relationship between the second address of the source VM and the first address of the register group of the corresponding hardware identifier on the target GPU core.

In a possible implementation, establishing a mapping between the corresponding hardware identifier on the target GPU core and the command queue for the source VM and a mapping between the corresponding hardware identifier on the target GPU core and the general-purpose video memory for the source VM based on the migration command comprises:
acquiring a first page table of a target command queue based on the migration command, wherein the first page table indicates a mapping relationship between a third address of the command queue and a first address of the command queue, and a mapping relationship between a third address of the general-purpose video memory and a first address of the general-purpose video memory, the target command queue is a command queue indicated by the corresponding hardware identifier on the target GPU core, the first address indicates a physical video memory address of the host, and the third address indicates a virtual video memory address of the host; and
in a case where sizes of the third addresses used by the command queues between the VMs are the same, replacing the first page table of the target command queue with a first page table of the source VM command queue, to establish a mapping between the corresponding hardware identifier on the target GPU core and the command queue for the source VM and a mapping between the corresponding hardware identifier on the target GPU core and the general-purpose video memory for the source VM.

In a possible implementation, in a case where sizes of the third addresses used by the command queues between the VMs are different, establishing a mapping between the corresponding hardware identifier on the target GPU core and the command queue for the source VM and a mapping between the corresponding hardware identifier on the target GPU core and the general-purpose video memory for the source VM based on the migration command, further comprises:
acquiring a second page table of the target command queue based on the migration command, wherein the second page table indicates a mapping relationship between a second address of the command queue and a third address of the command queue, and a mapping relationship between a second address of the general-purpose video memory and a third address of the general-purpose video memory; and
replacing the second page table of the target command queue with a second page table of the source VM command queue.

In a possible implementation, the apparatus further comprises:
a second establishing module, configured to establish a first page table and a second page table for the command queue and the general-purpose video memory of the corresponding hardware identifier of the GPU core, when the host driver is initialized.

In a possible implementation, the processing module is configured to:
in response to a write operation on the register group of the corresponding hardware identifier on the target GPU core, acquire information of the workload from the source VM by a micro controller unit (MCU) of the target GPU core based on the migrated association relationship, wherein the information of the workload comprises a second address corresponding to the current workload and a third address of a page table root directory associated with the current workload; and
configure, by the MCU of the target GPU core, the second address corresponding to the workload and the third address of the page table root directory associated with the current workload to an engine of the target GPU core, so as to address on the video memory of the host by the engine of the target GPU core to process the current workload.

In a possible implementation, the first establishing module is configured to:
in a case that there is an idle resource on the target GPU core, establish an association relationship between the source VM and the corresponding hardware identifier on the target GPU core based on the migration command.

In a possible implementation, the migration command comprises an identifier of the target GPU core and the corresponding hardware identifier on the target GPU core.

According to another aspect of the present disclosure, there is provided a graphics processing unit (GPU) scheduling apparatus comprising: a processor; and a memory for storing instructions executable by the processor, wherein the processor is configured to implement the methods described above when executing the instructions stored in the memory.

According to another aspect of the present disclosure, there is provided a non-transitory computer readable storage medium having computer program instructions stored thereon, wherein the computer program instructions, when executed by a processor, implement the methods described above.

According to another aspect of the present disclosure, there is provided a computer program product, comprising: computer readable code, or a non-transitory computer readable storage medium carrying computer readable code, wherein when the computer readable code runs in a processor of an electronic device, the processor of the electronic device carries out the methods described above.

According to the embodiment of the present disclosure, by acquiring the migration command and establishing the association relationship between the source VM and the corresponding hardware identifier on the target GPU core based on the migration command, the workload from the source VM can be processed by the target GPU core based on the migrated association relationship without powering off the VM, so that the workload of the source VM is migrated from the high-load source GPU core to the idle target GPU core, implementing a hot migration between the cores of the multi-core GPU, balancing the load between the plurality of GPU cores, reducing the pressure of the high-load GPU core, shortening the response time, and improving the throughput.

Other features and aspects of the present disclosure will become apparent in light of the following detailed descriptions of the exemplary embodiments with reference to the drawings.

### BRIEF DESCRIPTION OF THE DRAWINGS

The accompanying drawings, which are incorporated in and constitute a part of the description, illustrate exemplary embodiments, features, and aspects of the present disclosure and, together with the description, serve to explain the principles of the disclosure.
FIG. 1 illustrates a schematic diagram of an application scenario according to one embodiment of the present disclosure.
FIG. 2 illustrates a schematic diagram of an application scenario according to one embodiment of the present disclosure.
FIG. 3 illustrates a flowchart of a GPU scheduling method according to one embodiment of the present disclosure.
FIG. 4 illustrates a flowchart of a GPU scheduling method according to one embodiment of the present disclosure.
FIG. 5 illustrates a schematic diagram of register group resource partition according to one embodiment of the present disclosure.
FIG. 6 illustrates a flowchart of a GPU scheduling method according to one embodiment of the present disclosure.
FIG. 7 illustrates a flowchart of a GPU scheduling method according to one embodiment of the present disclosure.
FIG. 8 illustrates a schematic diagram of video memory resource partition according to one embodiment of the present disclosure.
FIG. 9 illustrates a flowchart of a GPU scheduling method according to one embodiment of the present disclosure.
FIG. 10 illustrates a schematic diagram of an application scenario according to one embodiment of the present disclosure.
FIG. 11 illustrates a flowchart of a GPU scheduling method according to one embodiment of the present disclosure.
FIG. 12 illustrates a structural diagram of a GPU scheduling apparatus according to one embodiment of the present disclosure.
FIG. 13 is a block diagram of an apparatus 1900 for scheduling a GPU illustrated according to one exemplary embodiment.

### DETAILED DESCRIPTION

Various exemplary embodiments, features and aspects of the present disclosure will be described in detail below with reference to the drawings. In the drawings, the same numerical references denote elements with the same or similar functions. Although various aspects of the embodiments are shown in the drawings, unless otherwise specified, the drawings are not necessarily drawn to scale.

The word "exemplary" used exclusively here means "serving as an example, embodiment or illustration". Any embodiment described here as "exemplary" is not necessarily to be interpreted as superior to or better than other embodiments.

In addition, to better describe the present disclosure, numerous specific details are given in the following specific embodiments. It is appreciated by those skilled in the art that the present disclosure can still be implemented without some specific details. In some embodiments, methods, means, elements, and circuits well known to those skilled in the art are not described in detail in order to highlight the gist of the present disclosure.

GPUs have very important usages in fields such as graphical image rendering, parallel computing, and artificial intelligence. In the GPU virtualization technology, to achieve a support for a plurality of VMs using one GPU simultaneously, hardware resources of the GPU will be partitioned into a plurality of parts, to provide an independent hardware resource for each VM. In this way, in a multi-core GPU scenario, in a current technical solution, usually a workload from a VM can only be processed on a GPU core initially selected upon power on. Since the VM may be powered on or off at any time, there is a possibility that workloads of a plurality of VMs are all concentrated on a certain GPU core, and at this time, other GPU cores are idle, which not only wastes hardware resources, but also increases pressure of the loaded GPU cores, resulting in load imbalance between cores. Therefore, a new GPU scheduling method is needed to facilitate load balancing on a plurality of GPU cores, so as to shorten a response time, and improve a throughput.

In view of this, the present disclosure provides a graphics processing unit (GPU) scheduling method. In the method in the embodiment of the present disclosure, by acquiring the migration command and establishing the association relationship between the source VM and the corresponding hardware identifier on the target GPU core based on the migration command, the workload from the source VM can be processed by the target GPU core based on the migrated association relationship without powering off the VM, so that the workload of the source VM is migrated from the high-load source GPU core to the idle target GPU core, implementing a hot migration between the plurality of GPU cores. As a result, the load between the plurality of GPU cores can be balanced, the pressure of the high-load GPU core can be reduced, the response time can be shortened, and the throughput can be improved.

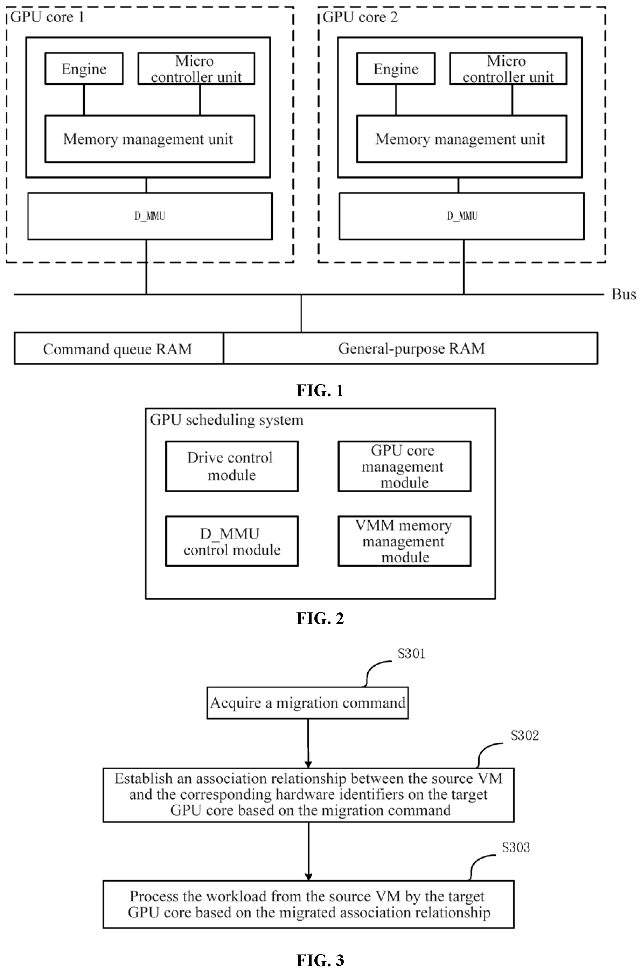

FIG. 1 illustrates a schematic diagram of an application scenario according to one embodiment of the present disclosure. The GPU scheduling method in an embodiment of the present disclosure may be applied to a scenario in which virtualization is performed on a multi-core GPU. GPU virtualization (graphics card virtualization) is to partition hardware resources and allocate them to different virtual machines for use. In the scenario of the multi-core GPU, each GPU core may be partitioned into multiple parts of resources, different resources may be indicated with different hardware identifiers (hardware IDs), and each resource may be allocated to one VM. As shown in FIG. 1, each GPU core (for example, a GPU core 1, a GPU core 2 in the drawings) may include one or more engines, micro controller units (MCUs), and memory management units (MMUs). In a scenario of an embodiment of the present disclosure, each GPU core further includes a D_MMU. A D_MMU may be an input-output memory management unit (IOMMU), or may be an address translation unit. The GPU core may be connected to a video memory through a bus, and the video memory may include a command queue random access memory (RAM) and a general-purpose RAM.

After the workload is created by a guest driver of the VM, the MCU may be used to dispatch the workload from the VM to engines for processing. In this procedure, when the guest driver creates the workload, in a command to be processed by the engines, the address is filled with a virtual video memory address of the VM, which can be referred to as a guest virtual address (GVA). The workload may further include a virtual video memory address of a host of an associated page table root directory, which can be referred to as a device virtual address (DVA), and the virtual video memory address is written together into the command queue for the video memory. If the register of the GPU core is written, the MCU may acquire the workload from the VM in response to this write operation, and configure the workload to a corresponding engine for processing. When the MCU schedules a task, besides sending workload content to the engine, the MCU also sets a page table root directory associated with the workload to the engine. The MMU may be used to convert the GVA into a DVA; the D_MMU may be used to convert the DVA into a physical video memory address of the host, which can be referred to as a device physical address (DPA); and the DPA may be sent to the bus to address the video memory. Therefore, the engine can access the video memory based on the GVA in the workload and the DVA of the page table root directory associated with the workload, to process the corresponding workload. The MCU needs to be able to access the command queues of all VMs, so spaces will be reserved for all supported VM command queues on the current GPU core, and mapped to the GVA of the MCU (completed by a subsequent GPU core management module).

In the foregoing scenario, the workload of a VM is usually processed on a GPU core selected when a device is created, and load imbalance between GPU cores cannot be avoided. For example, if the GPU includes four cores and each core is partitioned into eight parts of resources corresponding to eight hardware IDs, that is, each core can support up to eight VMs at most, because a VM may be powered on or off anytime, there may be a case in which workloads of the eight VMs are concentrated on a certain core for processing while the other cores are idle. At this time, load between the cores is not balanced, wasting hardware resources and affecting user experience.

On this basis, FIG. 2 illustrates a schematic diagram of an application scenario according to one embodiment of the present disclosure. Based on the GPU scheduling system in the embodiment of the present disclosure shown in FIG. 2, the workload from the VM can be migrated between cores, so that GPUs are scheduled and loads on multiple cores are balanced, to cope with the foregoing case of imbalanced load between the cores. As shown in FIG. 2, the GPU scheduling system may include a drive control module, a GPU core management module, a D_MMU control module, and a virtual machine manager (VMM) memory management module.

The drive control module is a module in a host driver, and can be used to provide an interface of a migration command for an application program. In an initialization phase, it registers a misc device with a kernel, and provides a plurality of control APIs for a control program through ioctl callback of the driver. Alternatively, it may be implemented by other APIs provided by an operating system. Control APIs include, but are not limited to, queries for GPU core ID, queries for hardware ID, and a VM workload migration control. Upon the VM workload migration control, parameters incoming to the module are a GPU core ID and a hardware ID of the source VM, and a return value indicates success or failure.

The GPU core management module may be used to initialize the GPU core (which may include a command queue initialization, an MCU initialization (establishing page tables for the MCU firmware and setting corresponding registers, so that the GVA can be used after the firmware is started), a D_MMU initialization, and the like), initialize and map a part of a video memory reserved for the GPU core for management, maintain the correspondence between GPU cores and hardware IDs, and that between hardware IDs and VMs, apply for an interrupt number, register an interrupt processing function, load an MCU firmware, and the like.

The D_MMU control module may be used to provide an external interface to initialize and configure the D_MMU on the GPU core. The input parameters include a GPU core ID, a hardware ID, a mapped destination address DPA, a DVA, and a video memory address that may be used to save page tables; and the VMM memory management module may be provided by a hypervisor to establish and maintain a second-stage page table for memory virtualization.

In addition, the GPU core may further provide functions of the virtual device, such as creation, destruction, and control, and this function may be implemented by an IO virtualization framework provided by the hypervisor.

Based on FIG. 1 and FIG. 2, the following describes in detail the GPU scheduling method in the embodiments of the present disclosure through FIG. 3 to FIG. 9.

Referring to FIG. 3, a flowchart of a GPU scheduling method according to one embodiment of the present disclosure is illustrated. The GPU scheduling method of the embodiments of present disclosure may be applied to the foregoing GPU scheduling system. As shown in FIG. 3, the method may include:
Step S301: acquire a migration command.

The migration command is used to migrate the workload of the source VM from the source GPU core onto the target GPU core. The source GPU core may be a GPU core with more load than the target GPU core. That is, there may be more workloads of VM in amount on the source GPU core and less workloads of VM in amount on the target GPU core. Therefore, the workload of the source VM may be migrated from the source GPU core onto the target GPU core through the migration command.

The migration command may be input by a user or automatically generated based on a current load status between GPU cores. The migration command may include an identifier of the target GPU core and a corresponding hardware identifier on the target GPU core. For example, the identifier of the target GPU core and the corresponding hardware identifier (that is, the hardware ID) on the target GPU core may be acquired by the drive control module described above. The identifier of the target GPU core may be used to indicate a unique target GPU core, and the corresponding hardware ID on the target GPU core may be used to indicate one of the resources on the target GPU core. Because each resource on the GPU may be associated with one VM, the association relationship between the source VM and the source hardware ID may be changed to the association relationship between the source VM and the target hardware ID by the migration command, establishing the association relationship between the source VM and the target hardware ID. As described below, the source hardware ID can be used to indicate one of the resources on the source GPU core.

Step S302: establish an association relationship between the source VM and the corresponding hardware identifier on the target GPU core based on the migration command.

Because the target GPU core can be partitioned into a plurality of resources, the corresponding hardware identifier (hardware ID) on the target GPU core may be an identifier for indicating one of the resources on the target GPU core, that is, the hardware ID corresponds to a certain resource on the target GPU core. By establishing the association relationship between the source VM and the hardware ID, the workload of the source VM may be migrated to a certain resource on the target GPU core corresponding to the hardware ID for processing.

Optionally, the step S302 may include:
in a case that there is an idle resource on the target GPU core, establishing an association relationship between the source VM and the corresponding hardware identifier on the target GPU core based on the migration command.

For example, the above GPU core management module may determine whether there is an idle resource on the target GPU core, and determine, based on a correspondence between a current hardware ID on the target GPU core and the VM, whether there is a hardware ID that can be allocated to the source VM on the target GPU core. If there is no idle resource on the target GPU core, corresponding information may be returned to the drive control module, so that the drive control module may return information representing a migration failure to the application program.

Therefore, migration of the workload of the VM between the GPU cores can be flexibly implemented based on a current load status between the GPU cores, shortening a response time, improving a throughput of the GPU, and improving user experience. In this process, the VM does not need to perceive.

The implementation of step S302 will be described in detail below.

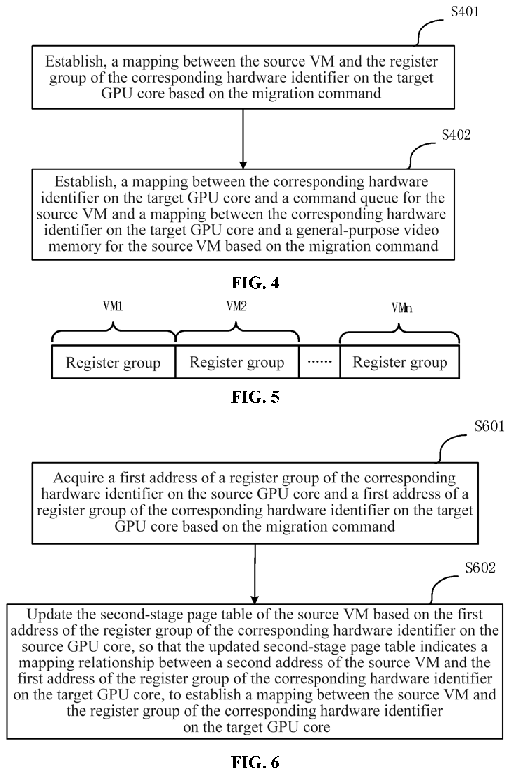

FIG. 4 illustrates a flowchart of a GPU scheduling method according to one embodiment of the present disclosure. As shown in FIG. 4, the step S302 may include:
Step S401: establish a mapping between the source VM and the register group of the corresponding hardware identifier on the target GPU core based on the migration command.

In a GPU virtualization scenario, one of its targets is that multiple VMs can use one GPU device simultaneously, that is, it is necessary to support multiple VMs to submit workloads to the GPU device concurrently; the GPU can identify the workloads from different VMs; and the GPU can notify the VM initiating the workload of a process completion event. To this end, the GPU core may partition the hardware resources into a plurality of parts, and these hardware resources may include interrupt lines, register groups, video memories, etc. Thus, an independent hardware resource is provided for each VM.

The register group has a fixed length, provides necessary registers required for workload processing and interrupt processing, and has a binding relationship with the GPU core and cannot be accessed across the GPU cores. The register group may include registers required for workload processing and interrupt processing. For example, the register group may include a doorbell register, an interrupt status register, an interrupt control register, and the like.

The hardware identifiers may be used to represent different hardware resources, so that the hardware identifiers may be in a one-to-one correspondence with the register groups. In a virtualization scenario, the hardware identifiers may also be used to index the VMs by making the hardware identifiers associated with the VMs. Referring to FIG. 5, a schematic diagram of register group resource partition according to one embodiment of the present disclosure is illustrated. As shown in FIG. 5, the hardware resources related to the register groups may be partitioned into n parts, and each may be allocated to one VM, so that the n register groups may respectively correspond to n VMs (for example, VM1, VM2, ..., VMn in the drawings). The register resource may be a video memory on a GPU card or system memory, and the GPU provides a certain degree of isolation through an on-chip MMU. All register resources are visible to the MCU to support scheduling of different VMs. Access isolation of register resource is ensured by the GPU itself and by the hypervisor using a mechanism of a hardware virtual machine, and a host driver may be responsible for allocations of the register resources.

Because the hardware identifier is in a one-to-one correspondence with a register group and there is an association relationship between the hardware identifier and the VM, in the present disclosure, to establish an association relationship between the source VM and the corresponding hardware identifier on the target GPU core, first, a mapping between the source VM and a source register group may be changed, and a new mapping between the source VM and a new register group is established, wherein the new register group may be a register group of the corresponding hardware identifier on the target GPU core. For a manner of establishing the new mapping between the source VM and the new register group, please refer to the followings.

FIG. 6 illustrates a flowchart of a GPU scheduling method according to one embodiment of the present disclosure. As shown in FIG. 6, the step S401 may include:
Step S601: acquire a first address of a register group of the corresponding hardware identifier on the source GPU core and a first address of a register group of the corresponding hardware identifier on the target GPU core based on the migration command.

The length of the register group allocated to each VM may be fixed, and the first address may be used to indicate a physical video memory address of the host, that is, the DPA described above.

Step S602: update the second-stage page table of the source VM based on the first address of the register group of the corresponding hardware identifier on the source GPU core, so that the updated second-stage page table indicates a mapping relationship between a second address of the source VM and the first address of the register group of the corresponding hardware identifier on the target GPU core, to establish a mapping between the source VM and the register group of the corresponding hardware identifier on the target GPU core.

The first address is the DPA described above, and the second address may be used to indicate a virtual video memory address of the VM, that is, the GVA described above. The second-stage page table may be used to indicate a mapping relationship between the GVA of the VM and the DPA of the register group, and the second-stage page table may be established and maintained by the VMM memory management module.

Optionally, a process of updating the second-stage page table of the source VM based on the first address of the register group of the corresponding hardware identifier on the source GPU core to establish the mapping between the source VM and the register group of the corresponding hardware identifier on the target GPU core may be implemented based on a trap mechanism. Referring to the followings, the step S602 may include:
changing the corresponding fragment in the second-stage page table of the source VM based on the first address of the register group of the corresponding hardware identifier on the source GPU core, so that access to the register group of the corresponding hardware identifier on the source GPU core is trapped; and updating the second-stage page table of the source VM after the trapping, so that the updated second-stage page table indicates a mapping relationship between the second address of the source VM and the first address of the register group of the corresponding hardware identifier on the target GPU core.

The trapping of the access to the register group of the corresponding hardware identifier may be trapping of an access to a register such as a doorbell in the register groups.

After the trapping, a predetermined error handling function in the host driver may be invoked to execute error handling for GPU core registration, and a hypervisor mapping interface is invoked based on the first address of the register group of the corresponding hardware identifier on the target GPU core to update the second-stage page table, so that the updated second-stage page table indicates a mapping relationship between the second address of the source VM and the first address of the register group of the corresponding hardware identifier on the target GPU core.

For example, changing the corresponding fragment in the second-stage page table of the source VM may include: clearing, by the VMM management module, content allocated to a second-stage page table of the source VM, and buffer information such as the identifier of the target GPU core and the corresponding hardware ID on the target GPU core; adding an illegal value to the corresponding command, so that access to a register such as a doorbell is trapped; and after the trapping, invoking a corresponding error handling function in a host driver to execute error handling for the GPU core registration, wherein a process of the error handling may include: determining, by using the buffer information such as the identifier of the target GPU core and the corresponding hardware ID on the target GPU core described above, a DPA (that is, the first address) of the register group of the corresponding hardware identifier on the target GPU core, and invoking, based on the DPA, a hypervisor mapping interface to re-establish a second-stage page table for the source VM, so that the new second-stage page table indicates a mapping relationship between a GVA of the source VM and the DPA of the register group of the corresponding hardware identifier on the target GPU core, thereby updating the second-stage page table of the source VM and obtaining the updated second-stage page table.

In this process, the current state of the host may also be updated to the migrated state.

According to the embodiments of the present disclosure, an update of the second-stage page table using the trap mechanism can be implemented, so that the new second-stage page table may indicate the mapping relationship between the GVA of the source VM and the DPA of the register group of the corresponding hardware identifier on the target GPU core, achieving migration of the mapping relationship related to the register group and creating a condition for balancing the load between the GPU cores.

Because the only channel through which the guest driver sends a message to the MCU is a command queue, when the MCU receives a doorbell register write event, the only sideband signal is hardware ID. To enable the MCU to conveniently acquire a location of the command queue, the hardware ID may be in one-to-one correspondence with the command queue.

Referring back to FIG. 4, in the present disclosure, in order to establish the association relationship between the source VM and the corresponding hardware identifier on the target GPU core, the mapping between the source hardware ID and the command queue for the source VM and the mapping between the source hardware ID and the general-purpose video memory for the source VM may also be changed to establish a new mapping, as described below.

Step S402: establish a mapping between the corresponding hardware identifier on the target GPU core and a command queue for the source VM and a mapping between the corresponding hardware identifier on the target GPU core and a general-purpose video memory for the source VM based on the migration command.

The corresponding hardware identifier on the target GPU core may be a hardware ID of a resource to which the workload of the source VM is intended to migrate. For a location of the command queue in the hardware, please refer to the command queue RAM in FIG. 1, and for a location of the general-purpose video memory in the hardware, please refer to the general-purpose RAM in FIG. 1. The general-purpose video memory may be used to save a GPU core page table (namely, the second page table), workload command data, and the like created by the guest driver of the VM.

The mapping between the hardware ID and the command queue for the source VM and the mapping between the hardware ID and the general-purpose video memory of the source VM that existed before the new mapping is established may be statically set by the GPU core management module in the host driver initialization phase.

The initialization can be initialized using the GPU core management module before S301. When the host driver is initialized, a first page table and a second page table may be established for the command queue and the general-purpose video memory of the corresponding hardware identifier of the GPU core.

According to this embodiment of the present disclosure, establishing, based on the migration command, the mapping between the source VM and the register group of the corresponding hardware identifier on the target GPU core, the mapping between the corresponding hardware identifier on the target GPU core and the command queue for the source VM, and the mapping between the corresponding hardware identifier on the target GPU core and the general-purpose video memory for the source VM may enable the migration of the workload of the source VM from the high-load source GPU core to the idle target GPU core, balancing the load between the plurality of GPU cores, reducing the pressure of the high-load GPU core, shortening the response time, and improving the throughput.

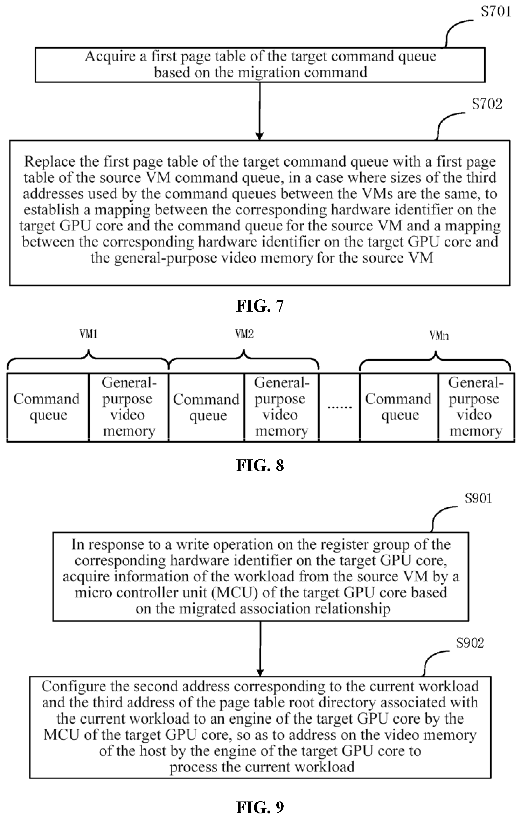

The following describes the process of step S402 in detail, and in the present disclosure, a third address (that is, the DVA described above) is introduced in this process, so that the DPA does not need to be changed in a process of establishing remapping for the command queue and the general-purpose video memory, and thus no trap will be triggered in this process, and a central processing unit (CPU) needs no additional operation. Referring to FIG. 7, a flowchart of a GPU scheduling method according to one embodiment of the present disclosure is illustrated. As shown in FIG. 7, the step S402 may include:
Step S701: acquire a first page table of the target command queue based on the migration command.

The target command queue associated with the hardware ID may be determined based on the identifier and the hardware ID of the target GPU core in the migration command to acquire the first page table thereof. This process may be implemented by a memory virtualization technology provided by a hypervisor, and details are not described herein again.

The first page table may indicate a mapping relationship between the third address of the command queue and the first address of the command queue, and a mapping relationship between the third address of the general-purpose video memory and the first address of the general-purpose video memory; the target command queue may be a command queue indicated by the corresponding hardware identifier on the target GPU core, the first address may be used to indicate a physical video memory address of the host (that is, the DPA described above), and the third address may be used to indicate a virtual video memory address of the host (that is, the DVA described above).

Step S702: in a case where sizes of the third addresses used by the command queues between the VMs are the same, replace the first page table of the target command queue with a first page table of the source VM command queue, to establish a mapping between the corresponding hardware identifier on the target GPU core and the command queue for the source VM and a mapping between the corresponding hardware identifier on the target GPU core and the general-purpose video memory for the source VM.

Referring to FIG. 8, a schematic diagram of video memory resource partition according to one embodiment of the present disclosure is illustrated. As shown in FIG. 8, hardware resources related to a video memory may be partitioned into n parts, and each may include a command queue RAM and a general-purpose RAM. Each may be allocated to one VM, and the n resources may correspond to n VMs (for example, VM1, VM2, ..., VMn in the drawings) respectively.

Based on the schematic diagram of video memory resource partition shown in FIG. 8, because each resource indicated by the hardware ID includes the command queue and the general-purpose video memory, when the first page table of the command queue is replaced, the first page table of the general-purpose video memory is also replaced, thereby establishing new mappings, that is, a mapping between the corresponding hardware ID on the target GPU core and the command queue for the source VM and a mapping between the corresponding hardware ID on the target GPU core and the general-purpose video memory for the source VM.

In the present disclosure, a D_MMU (refer to FIG. 1) is introduced, so that the first page table of the source VM command queue can represent the mapping relationship between the DVA and the DPA. At this time, all VMs can use the same DVA space and differ only in the DPA. In this way, because the sizes of the third address used by the command queues between the VMs are the same, only the first page table needs to be replaced, so that the remapping of the VM general-purpose video memory needs no additional operation. Because the DPAs of the VM command queue and the general-purpose video memory are unchanged at this time, and the access by a Guest to the command queue and the video memory is implemented by the memory virtualization technology provided by the hypervisor, the access does not trigger a trap. Therefore, from a perspective of the CPU, no additional operations are is required at this time.

Optionally, in the case where the sizes of the third addresses used by the command queues between VMs are different, that is, in the case where the DVA spaces used by the respective VMs are different, the step S402 may further include:
acquiring a second page table of the target command queue based on the migration command; and replacing the second page table of the target command queue with the second page table of the source VM command queue.

The second page table may indicate a mapping relationship between the second address of the command queue and the third address of the command queue and between a mapping relationship the second address of the general-purpose video memory and the third address of the general-purpose video memory; and the second address may be used to indicate a virtual video memory address of the VM (that is, the GVA described above). That is, in this case, the second page table also needs to be replaced while replacing the first page table.

Therefore, the process of migrating the workload of the source virtual machine VM from the source GPU core to the target GPU core can be completed, and when the MCU on the target GPU core subsequently accesses the command queue associated with the corresponding hardware ID by the GVA, the command queue for the source VM can be accessed.

Referring back to FIG. 3, after migration is completed, the workload from the source VM can be processed by the target GPU core, as described below.

Step S303: process the workload from the source VM by the target GPU core based on the migrated association relationship.

That is, the workload from the source VM may be processed by the target GPU core based on the migrated association relationship between the source VM and the target hardware ID; for a detailed process thereof, refer to the following.

According to the embodiment of the present disclosure, by acquiring the migration command and establishing the association relationship between the source VM and the corresponding hardware identifier on the target GPU core based on the migration command, the workload from the source VM can be processed by the target GPU core based on the migrated association relationship without powering off the VM, so that the workload of the source VM is migrated from the high-load source GPU core to the idle target GPU core, implementing a hot migration between the cores of the multi-core GPU, balancing the load between the plurality of GPU cores, reducing the pressure of the high-load GPU core, shortening the response time, and improving the throughput.

FIG. 9 illustrates a flowchart of a GPU scheduling method according to one embodiment of the present disclosure. As shown in FIG. 9, the step S303 may include:
Step S901: in response to a write operation on the register group of the corresponding hardware identifier on the target GPU core, acquire information of the workload from the source VM by a micro controller unit (MCU) of the target GPU core based on the migrated association relationship.

The write operation on the register group of the corresponding hardware identifier on the target GPU core may be a write operation on a doorbell register in the register group, and the information of the workload may include a second address (that is, GVA) corresponding to the current workload and a third address (that is, DVA) of a page table root directory associated with the current workload.

Step S902: configure, by the MCU of the target GPU core, the second address corresponding to the current workload and the third address of the page table root directory associated with the current workload to an engine of the target GPU core, so as to address on the video memory of the host by the engine of the target GPU core to process the current workload.

The GVA may be converted into the DPA based on the second-stage page table, to obtain the DPA of the current workload. The DVA may be further converted into a DPA based on the first page table by the D_MMU, to obtain a DPA of the page table root directory associated with the current workload. Based on the DPA of the page table root directory and the DPA of the workload, the engine of the target GPU core can be used to address on the video memory of the host and to access the video memory, so as to process the current workload; and the source VM can be notified after the processing is completed.

Therefore, load between GPU cores can be balanced, and after migration, VMs associated with other hardware IDs on the target GPU core are not affected, so that existing hardware is efficiently used, and user experience is improved.

In the embodiment of the present disclosure, by using the DVA, content of the command queue does not need to be copied upon migration and the DPA does not need to be included in the workload; the DPA in the command does not need to be parsed or modified to the DPA of the new GPU core in the initialization phase upon migration, so that the migration process is more efficient.

The present disclosure further provides a GPU scheduling method.

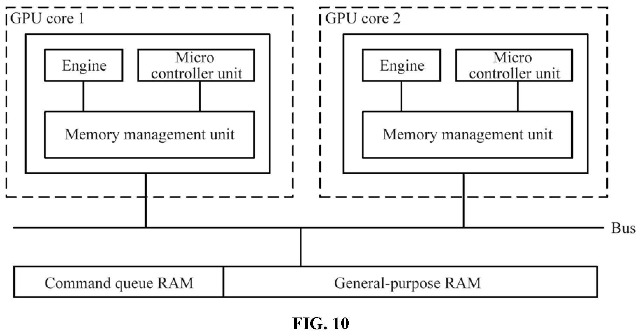

FIG. 10 illustrates a schematic diagram of an application scenario according to one embodiment of the present disclosure. As shown in FIG. 10, the GPU scheduling method in the embodiment of the present disclosure may be applied to a scenario in which virtualization is performed on a multi-core GPU. In the scenario of the multi-core GPU, each GPU core (for example, a GPU core 1 and a GPU core 2 in the drawings) of the multi-core GPU runs independently and does not affect each other. Each GPU core may be partitioned into a plurality of resources, and different resources may be indicated by different hardware identifiers (hardware IDs), and each resource may be allocated to one VM. As shown in FIG. 1, each GPU core (for example, a GPU core 1, a GPU core 2 in the drawings) may include one or more engines (responsible for executing a workload), a micro controller unit (MCU), and a memory management unit (MMU). The GPU core may be connected to the video memory through a bus, and the video memory may include a command queue random access memory (RAM) and a general-purpose RAM.

After the guest driver of the VM creates a workload, the software FW running on the MCU is responsible for scheduling and dispatching the workload from the VM to the engines for processing. In this procedure, when the guest driver creates the workload, in a command to be processed by the engines, a virtual video memory address, the address is filled with a virtual video memory address of the VM, which can be referred to as a guest virtual address (GVA). If the register of the GPU core is written, the MCU may acquire the workload from the VM in response to this write operation, and configure the workload to a corresponding engine for processing. The MMU may be used to convert the GVA into a physical video memory address of the host, which may be referred to as a device physical address (DPA), and the DPA may be sent to the bus to address a video memory (on a terminal device or a server, where a graphics card accesses a system through a PCIe bus, so at that time the DPA is a DPA of a bus inside the graphics card). When addressing the video memory, the DPA may be used for addressing. In a scenario in which a system memory functions as a video memory, the DPA needs to be further converted into a PCIe bus domain address through a PCIe module, and then addresses the system memory through an RC). Therefore, the engine can access the video memory based on the GVA in the workload, to process the corresponding workload.

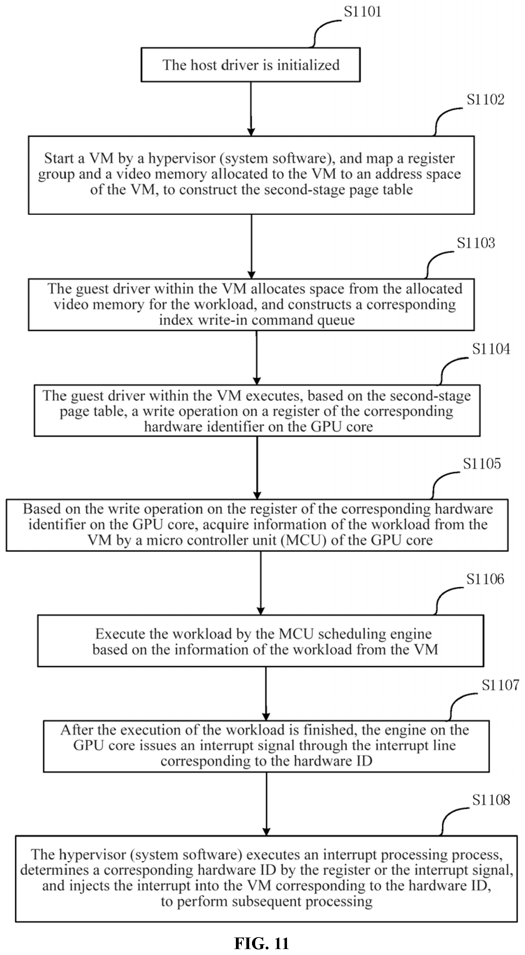

FIG. 11 illustrates a flowchart of a GPU scheduling method according to one embodiment of the present disclosure. As shown in FIG. 11, the method may include:
Step S1101: the host driver is initialized.

During the initialization, the host driver may allocate a hardware ID, a register group, and a video memory of a predetermined size to a virtual machine VM. A correspondence between hardware IDs and VMs may be further maintained and recorded, and the hardware IDs may be used to represent hardware resources (a register group, a video memory, and the like) allocated by the above host driver to the VM.

The host driver may further construct an initialization structure in the video memory allocated to the VM.

Step S1102: start a VM by a hypervisor (system software), and map the register group and the video memory allocated to the VM to an address space of the VM, to construct the second-stage page table.

The second-stage page table may be used to indicate a mapping relationship between the GVA of the VM and the DPA of the register group.

In this way, the guest driver within the VM is enabled to start executing the corresponding workload.

Step S1103: the guest driver within the VM allocates space from the allocated video memory for the workload, and constructs a corresponding index write-in command queue.

Step S1104: the guest driver within the VM executes, based on the second-stage page table, a write operation on a register of the corresponding hardware identifier on the GPU core.

The register may be a doorbell register corresponding to the hardware ID, and the GPU may be notified, through the write operation, that a new command is added to the command queue.

Step S1105: based on the write operation on the register of the corresponding hardware identifier on the GPU core, acquire information of the workload from the VM by a micro controller unit (MCU) of the GPU core.

The write operation on the register group of the corresponding hardware identifier on the GPU core may be a write operation on a doorbell register in the register group, and the information of the workload may include a GVA corresponding to the current workload.

Step S1106: execute the workload by the MCU scheduling the engine based on the information of the workload from the VM.

The GVA may be converted into the DPA based on the second-stage page table, to obtain the DPA of the current workload, so as to address on the video memory of the host by the DPA and access the video memory, to process the current workload.

Step S1107: after the execution of the workload is finished, the engine on the GPU core issues an interrupt signal through the interrupt line corresponding to the hardware ID.

Step S1108: the hypervisor (system software) executes an interrupt processing process, determines a corresponding hardware ID by the register or the interrupt signal, and injects the interrupt into the VM corresponding to the hardware ID, to perform subsequent processing.

The register may be an interrupt status register.

Therefore, execution and scheduling of workloads by the GPU can be achieved efficiently.

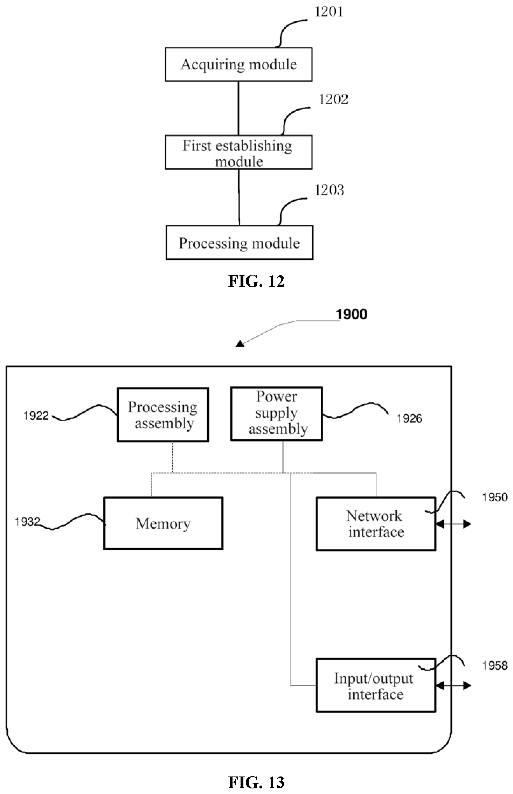

FIG. 12 illustrates a structural diagram of a GPU scheduling apparatus according to one embodiment of the present disclosure. As shown in FIG. 12, the apparatus may include:
an acquiring module 1201, configured to acquire a migration command for migrating a workload of a source virtual machine (VM) from a source GPU core to a target GPU core;
a first establishing module 1202, configured to establish an association relationship between the source VM and the corresponding hardware identifier on the target GPU core based on the migration command; and
a processing module 1203, configured to process the workload from the source VM by the target GPU core based on the migrated association relationship.

In a possible implementation, the first establishing module 1202 is configured to:
establish a mapping between the source VM and the register group of the corresponding hardware identifier on the target GPU core based on the migration command; and
establish a mapping between the corresponding hardware identifier on the target GPU core and a command queue for the source VM and a mapping between the corresponding hardware identifier on the target GPU core and a general-purpose video memory for the source VM based on the migration command.

In a possible implementation, establishing a mapping between the source VM and the register group of the corresponding hardware identifier on the target GPU core based on the migration command, comprises:
acquiring a first address of a register group of the corresponding hardware identifier on the source GPU core and a first address of the register group of the corresponding hardware identifier on the target GPU core based on the migration command, wherein the first address indicates a physical video memory address of a host; and
updating a second-stage page table of the source VM based on the first address of the register group of the corresponding hardware identifier on the source GPU core, so that the updated second-stage page table indicates a mapping relationship between a second address of the source VM and the first address of the register group of the corresponding hardware identifier on the target GPU core, to establish a mapping between the source VM and the register group of the corresponding hardware identifier on the target GPU core, with the second address indicating a virtual video memory address of the VM.

In a possible implementation, updating the second-stage page table of the source VM based on the first address of the register group of the corresponding hardware identifier on the source GPU core, so that the updated second-stage page table indicates a mapping between the second address of the source VM and the first address of the register group of the corresponding hardware identifier on the target GPU core comprises:
changing a corresponding fragment in the second-stage page table of the source VM based on the first address of the register group of the corresponding hardware identifier on the source GPU core, so that access to the register group of the corresponding hardware identifier on the source GPU core is trapped; and
after trapping, updating the second-stage page table of the source VM, so that the updated second-stage page table indicates a mapping relationship between the second address of the source VM and the first address of the register group of the corresponding hardware identifier on the target GPU core.

In a possible implementation, after trapping, updating the second-stage page table of the source VM, so that the updated second-stage page table indicates a mapping relationship between the second address of the source VM and the first address of the register group of the corresponding hardware identifier on the target GPU core, comprises:
after the trapping, invoking a predetermined error handling function in the host driver to execute error handling for GPU core registration, and invoking a hypervisor mapping interface based on the first address of the register group of the corresponding hardware identifier on the target GPU core to update the second-stage page table, so that the updated second-stage page table indicates a mapping relationship between the second address of the source VM and the first address of the register group of the corresponding hardware identifier on the target GPU core.

In a possible implementation, establishing a mapping between the corresponding hardware identifier on the target GPU core and the command queue for the source VM and a mapping between the corresponding hardware identifier on the target GPU core and the general-purpose video memory for the source VM based on the migration command comprises:
acquiring a first page table of a target command queue based on the migration command, wherein the first page table indicates a mapping relationship between a third address of the command queue and a first address of the command queue, and a mapping relationship between a third address of the general-purpose video memory and a first address of the general-purpose video memory, the target command queue is a command queue indicated by the corresponding hardware identifier on the target GPU core, the first address indicates a physical video memory address of the host, and the third address indicates a virtual video memory address of the host; and
in a case where sizes of the third addresses used by the command queues between the VMs are the same, replacing the first page table of the target command queue with a first page table of the source VM command queue, to establish a mapping between the corresponding hardware identifier on the target GPU core and the command queue for the source VM and a mapping between the corresponding hardware identifier on the target GPU core and the general-purpose video memory for the source VM.

In a possible implementation, in a case where sizes of the third addresses used by the command queues of VMs are different, establishing a mapping between the corresponding hardware identifier on the target GPU core and the command queue for the source VM and a mapping between the corresponding hardware identifier on the target GPU core and the general-purpose video memory for the source VM based on the migration command, further comprises:
acquiring a second page table of the target command queue based on the migration command, wherein the second page table indicates a mapping relationship between a second address of the command queue and a third address of the command queue, and a mapping relationship between a second address of the general-purpose video memory and a third address of the general-purpose video memory; and
replacing the second page table of the target command queue with a second page table of the source VM command queue.

In a possible implementation, the apparatus further comprises:
a second establishing module, configured to establish a first page table and a second page table for the command queue and the general-purpose video memory of the corresponding hardware identifier of the GPU core, when the host driver is initialized.

In a possible implementation, the processing module 1203 is configured to:
in response to a write operation on the register group of the corresponding hardware identifier on the target GPU core, acquire information of the workload from the source VM by a micro controller unit (MCU) of the target GPU core based on the migrated association relationship, wherein the information of the workload comprises a second address corresponding to the current workload and a third address of a page table root directory associated with the current workload; and
configure, by the MCU of the target GPU core, the second address corresponding to the workload and the third address of the page table root directory associated with the current workload to an engine of the target GPU core, so as to address on the video memory of the host by the engine of the target GPU core to process the current workload.

In a possible implementation, the first establishing module 1202 is configured to:
in a case that there is an idle resource on the target GPU core, establish an association relationship between the source VM and the corresponding hardware identifier on the target GPU core based on the migration command.

In a possible implementation, the migration command comprises an identifier of the target GPU core and the corresponding hardware identifier on the target GPU core.

According to the embodiments of the present disclosure, by acquiring the migration command and establishing the association relationship between the source VM and the corresponding hardware identifier on the target GPU core based on the migration command, the workload from the source VM can be processed by the target GPU core based on the migrated association relationship without powering off the VM, so that the workload of the source VM is migrated from the high-load source GPU core to the idle target GPU core, implementing a hot migration between the cores of the multi-core GPU, balancing the load between the plurality of GPU cores, reducing the pressure of the high-load GPU core, shortening the response time, and improving the throughput.

In some embodiments, the functions of or the modules included in the apparatus provided in the embodiments of the present disclosure may be used to carry out the methods described in the above method embodiments, the specific implementation of which may refer to the description of the above method embodiments and will not be repeated herein for the sake of brevity.

An embodiment of the present disclosure further provides a computer readable storage medium having computer program instructions stored therein, wherein the computer program instructions, when executed by a processor, implement the methods described above. The computer readable storage medium may be a transitory or non-transitory computer readable storage medium.

An embodiment of the present disclosure further provides an electronic device, comprising: a processor; and a memory for storing instructions executable by the processor, wherein the processor is configured to implement the methods described above when executing the instructions stored in the memory.

An embodiment of the present disclosure further provides a computer program product, comprising: computer readable code, or a non-transitory computer readable storage medium carrying computer readable code, wherein when the computer readable code runs in a processor of an electronic device, the processor of the electronic device carries out the methods described above.

FIG. 13 is a block diagram of an apparatus 1900 for scheduling a GPU illustrated according to one exemplary embodiment. For example, the apparatus 1900 may be provided as a server or a terminal device. Referring to FIG. 13, the apparatus 1900 comprises a processing assembly 1922, which further comprises one or more processors, and a memory resource represented by the memory 1932 for storing instructions executable by the processing assembly 1922, such as application programs. The application programs stored in the memory 1932 may include one or more modules, each corresponding to a set of instructions. In addition, the processing assembly 1922 is configured to execute the instructions to carry out the above methods.

The apparatus 1900 may further comprise a power supply assembly 1926, a wired or wireless network interface 1950, and an input/output interface 1958 (I/O interface), with the power supply assembly 1926 being configured to execute power management for the apparatus 1900; and the wired or wireless network interface 1950 being configured to connect the apparatus 1900 to a network. The apparatus 1900 may operate based on an operating system stored in the memory 1932, such as Windows ServerTM, Mac OS XTM, UnixTM, LinuxTM, FreeBSDTM, and the like.

An exemplary embodiment further provides a non-transitory computer readable storage medium, such as the memory 1932 that includes computer program instructions. The computer program instructions may be executed by the processing assembly 1922 of the apparatus 1900 to implement the above cache methods.

The present disclosure may be a system, a method, and/or a computer program product. The computer program product may include a computer readable storage medium carrying computer readable program instructions for causing a processor to implement the aspects of the present disclosure.

The computer readable storage medium can be a tangible device that can retain and store instructions used by an instruction executing device. The computer readable storage medium may be, but not limited to, e.g., electronic storage device, magnetic storage device, optical storage device, electromagnetic storage device, semiconductor storage device, or any proper combination thereof. More specific examples (a non-exhaustive list) of the computer readable storage medium include: portable computer diskette, hard disk, random access memory (RAM), read-only memory (ROM), erasable programmable read-only memory (EPROM or Flash memory), static random access memory (SRAM), portable compact disc read-only memory (CD-ROM), digital versatile disk (DVD), memory stick, floppy disk, mechanically encoded device (for example, punch-cards or raised structures in a groove having instructions stored thereon), and any proper combination thereof. A computer readable storage medium referred herein should not to be construed as transitory signal per se, such as radio waves or other freely propagating electromagnetic waves, electromagnetic waves propagating through a waveguide or other transmission media (e.g., light pulses passing through a fiber-optic cable), or electrical signal transmitted through a wire.

Computer readable program instructions described herein can be downloaded to individual computing/processing devices from a computer readable storage medium or to an external computer or external storage device via network, for example, the Internet, local area network, wide area network and/or wireless network. The network may comprise copper transmission cables, optical fiber transmission, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium in the respective computing/processing devices.

Computer program instructions for carrying out the operations of the present disclosure may be assembler instructions, instruction-set-architecture (ISA) instructions, machine instructions, machine-related instructions, microcode, firmware instructions, state-setting data, or source code or object code written in any combination of one or more programming languages, including an object oriented programming language, such as Smalltalk, C++, and the like, and the conventional procedural programming languages, such as the "C" programming language or similar programming languages. The computer readable program instructions may be executed completely on the user's computer, partly on the user's computer, as a stand-alone software package, partly on the user's computer and partly on a remote computer, or completely on a remote computer or a server. In the case with remote computer, the remote computer may be connected to the user's computer through any type of network, including local area network (LAN) or wide area network (WAN), or may be connected to an external computer (for example, connected through the Internet from an Internet Service Provider). In some embodiments, electronic circuitry, such as programmable logic circuitry, field-programmable gate arrays (FPGA), or programmable logic arrays (PLA), may be customized from state information of the computer readable program instructions; the electronic circuitry may execute the computer readable program instructions, so as to achieve the aspects of the present disclosure.

Aspects of the present disclosure have been described herein with reference to the flowchart and/or the block diagrams of the method, apparatus (system), and computer program product according to the embodiments of the present disclosure. It will be appreciated that each block in the flowchart and/or the block diagram, and combinations of blocks in the flowchart and/or block diagram, can be implemented by the computer readable program instructions.

These computer readable program instructions may be provided to a processor of a general purpose computer, a dedicated computer, or other programmable data processing apparatuses, to produce a machine, such that the instructions produce means for implementing the functions/acts specified in one or more blocks in the flowchart and/or block diagram when executed by the processor of the computer or other programmable data processing apparatuses. These computer readable program instructions may also be stored in a computer readable storage medium, wherein the instructions cause a computer, a programmable data processing apparatus and/or other devices to work in a particular manner, such that the computer readable storage medium having instructions stored thereon comprises a product that includes instructions implementing aspects of the functions/acts specified in one or more blocks in the flowchart and/or block diagram.

The computer readable program instructions may also be loaded onto a computer, other programmable data processing apparatuses, or other devices to have a series of operational steps executed on the computer, other programmable apparatuses or other devices, so as to produce computer implemented processes, such that the instructions executed on the computer, other programmable data processing apparatuses or other devices implement the functions/acts specified in one or more blocks in the flowchart and/or block diagram.

The flowcharts and block diagrams in the drawings illustrate the systematic architectures, functions, and operations that may be implemented by the system, method and computer program product according to the various embodiments of the present disclosure. In this regard, each block in the flowchart or block diagram may represent a module, a program segment, or a part of instructions, which comprises one or more executable instructions for implementing the specified logical functions. In some alternative implementations, the functions denoted in the blocks may occur in an order different from that denoted in the drawings. For example, two contiguous blocks may, in fact, be executed substantially parallel, or sometimes they may be executed in a reversed order, depending upon the functions involved. It will also be noted that each block in the block diagram and/or flowchart, and combinations of blocks in the block diagram and/or flowchart, can be implemented by dedicated hardware-based systems executing the specified functions or acts, or by combinations of dedicated hardware and computer instructions.

Although the embodiments of the present disclosure have been described above, the above descriptions are merely exemplary, but not exhaustive; and the disclosed embodiments are not limiting. A number of variations and modifications may apparently occur to those of ordinary skill in the art without departing from the scopes and spirits of the described embodiments. The terms used in the present disclosure are selected to provide the best explanation on the principles and practical applications of the embodiments or the technical improvements to the arts on market, or to make the embodiments described herein understandable to those of ordinary skill in the art.

## Claims

1. A graphics processing unit, GPU, scheduling method, comprising:
acquiring a migration command for migrating a workload of a source virtual machine, VM, from a source GPU core onto a target GPU core;
establishing an association relationship between the source VM and a corresponding hardware identifier on the target GPU core based on the migration command; and
processing the workload from the source VM by the target GPU core based on the migrated association relationship.

2. The method according to claim 1, wherein establishing the association relationship between the source VM and the corresponding hardware identifier on the target GPU core based on the migration command comprises:
establishing a mapping between the source VM and a register group of the corresponding hardware identifier on the target GPU core based on the migration command; and
establishing a mapping between the corresponding hardware identifier on the target GPU core and a command queue for the source VM and a mapping between the corresponding hardware identifier on the target GPU core and a general-purpose video memory for the source VM based on the migration command.

3. The method according to claim 2, wherein establishing the mapping between the source VM and the register group of the corresponding hardware identifier on the target GPU core based on the migration command comprises:
acquiring a first address of a register group of a corresponding hardware identifier on the source GPU core and a first address of the register group of the corresponding hardware identifier on the target GPU core based on the migration command, wherein the first address indicates a physical video memory address of a host; and
updating a second-stage page table of the source VM based on the first address of the register group of the corresponding hardware identifier on the source GPU core, so that the updated second-stage page table indicates a mapping relationship between a second address of the source VM and the first address of the register group of the corresponding hardware identifier on the target GPU core, to establish a mapping between the source VM and the register group of the corresponding hardware identifier on the target GPU core, wherein the second address indicates a virtual video memory address of the VM.

4. The method according to claim 3, wherein updating the second-stage page table of the source VM based on the first address of the register group of the corresponding hardware identifier on the source GPU core so that the updated second-stage page table indicates a mapping between the second address of the source VM and the first address of the register group of the corresponding hardware identifier on the target GPU core comprises:
changing a corresponding fragment in the second-stage page table of the source VM based on the first address of the register group of the corresponding hardware identifier on the source GPU core, so that access to the register group of the corresponding hardware identifier on the source GPU core is trapped; and
after trapping, updating the second-stage page table of the source VM, so that the updated second-stage page table indicates a mapping relationship between the second address of the source VM and the first address of the register group of the corresponding hardware identifier on the target GPU core.

5. The method according to claim 4, wherein after the trapping, updating the second-stage page table of the source VM, so that the updated second-stage page table indicates the mapping relationship between the second address of the source VM and the first address of the register group of the corresponding hardware identifier on the target GPU core, comprises:
after the trapping, invoking a predetermined error handling function in a host driver to execute error handling for GPU core registration, and invoking a hypervisor mapping interface based on the first address of the register group of the corresponding hardware identifier on the target GPU core to update the second-stage page table, so that the updated second-stage page table indicates the mapping relationship between the second address of the source VM and the first address of the register group of the corresponding hardware identifier on the target GPU core.

6. The method according to claim 2, wherein establishing the mapping between the corresponding hardware identifier on the target GPU core and the command queue for the source VM and the mapping between the corresponding hardware identifier on the target GPU core and the general-purpose video memory for the source VM based on the migration command comprises:
acquiring a first page table of a target command queue based on the migration command, wherein the first page table indicates a mapping relationship between a third address of the command queue and a first address of the command queue, and a mapping relationship between a third address of the general-purpose video memory and a first address of the general-purpose video memory, the target command queue is a command queue indicated by the corresponding hardware identifier on the target GPU core, the first address indicates a physical video memory address of the host, and the third address indicates a virtual video memory address of the host; and
in a case where sizes of the third addresses used by the command queues between the VMs are same, replacing the first page table of the target command queue with a first page table of a source VM command queue, to establish a mapping between the corresponding hardware identifier on the target GPU core and the command queue for the source VM and a mapping between the corresponding hardware identifier on the target GPU core and the general-purpose video memory for the source VM.

7. The method according to claim 2, wherein establishing the mapping between the corresponding hardware identifier on the target GPU core and the command queue for the source VM and the mapping between the corresponding hardware identifier on the target GPU core and the general-purpose video memory for the source VM based on the migration command comprises:
in a case where sizes of third addresses used by the command queues between the VMs are different, acquiring a second page table of a target command queue based on the migration command, wherein the second page table indicates a mapping relationship between a second address of the command queue and a third address of the command queue, and a mapping relationship between a second address of the general-purpose video memory and a third address of the general-purpose video memory;
replacing the second page table of the target command queue with a second page table of a source VM command queue;
acquiring a first page table of the target command queue based on the migration command, wherein the first page table indicates a mapping relationship between the third address of the command queue and a first address of the command queue, and a mapping relationship between the third address of the general-purpose video memory and a first address of the general-purpose video memory, the target command queue is a command queue indicated by the corresponding hardware identifier on the target GPU core, and the first address indicates a physical video memory address of the host; and
replacing the first page table of the target command queue with the first page table of the source VM command queue to establish a mapping between the corresponding hardware identifier on the target GPU core and the command queue for the source VM, and a mapping between the corresponding hardware identifier on the target GPU core and the general-purpose video memory for the source VM.

8. The method according to claim 7, further comprising:
establishing a first page table and a second page table for the command queue and the general-purpose video memory of the corresponding hardware identifier of the GPU core, when the host driver is initialized.

9. The method according to any one of claims 1-8, wherein processing the workload from the source VM by the target GPU core based on the migrated association relationship comprises:
in response to a write operation on the register group of the corresponding hardware identifier on the target GPU core, acquiring information of the workload from the source VM by a micro controller unit, MCU, of the target GPU core based on the migrated association relationship, wherein the information of the workload comprises a second address corresponding to a current workload and a third address of a page table root directory associated with the current workload; and
configuring, by the MCU of the target GPU core, the second address corresponding to the current workload and the third address of the page table root directory associated with the current workload to an engine of the target GPU core, so as to address on a video memory of the host by the engine of the target GPU core to process the current workload.

10. The method according to claim 1, wherein establishing the association relationship between the source VM and the corresponding hardware identifier on the target GPU core based on the migration command comprises:
in a case that there is an idle resource on the target GPU core, establishing the association relationship between the source VM and the corresponding hardware identifier on the target GPU core based on the migration command.

11. The method according to claim 1, wherein the migration command comprises an identifier of the target GPU core and the corresponding hardware identifier on the target GPU core.

12. A graphics processing unit, GPU, scheduling apparatus, comprising:
an acquiring module, configured to acquire a migration command for migrating a workload of a source virtual machine, VM, from a source GPU core onto a target GPU core;
a first establishing module, configured to establish an association relationship between the source VM and a corresponding hardware identifier on the target GPU core based on the migration command; and
a processing module, configured to process the workload from the source VM by the target GPU core based on the migrated association relationship.

13. A graphics processing unit, GPU, scheduling apparatus, comprising:
a processor; and
a memory for storing instructions executable by the processor;
wherein the processor is configured to implement the method according to any of claims 1 to 11 when executing the instructions stored in the memory.

14. A non-transitory computer readable storage medium having computer program instructions stored thereon, wherein the computer program instructions, when executed by a processor, implement the method according to any of claims 1 to 11.
